# EUROPÄISCHE PATENTANMELDUNG

(11) **EP 2 319 598 A1**
(43) Veröffentlichungstag der Anmeldung: **11.05.2011**
(21) Anmeldenummer: 09175223.8
(22) Anmeldetag: 06.11.2009
(51) Int. Cl.: B01D 9/00

(54) **Eindampfkristallisator**

(71) Anmelder: Ebner, Stefan, 61440 Oberursel/Taunus (DE)
(72) Erfinder: Ebner, Stefan, 61440 Oberursel/Taunus (DE)
(74) Vertreter: Köster, Hajo

(57) **Zusammenfassung**

Bereitgestellt wird ein Eindampfkristallisator (1), der mit einem Flüssigkeitsraum (4), gegebenenfalls einem Salzsack (3), einer Klarlösungs-Abzugseinrichtung (5), einer Umwälzleitung (2) sowie mit per se bekannten Mitteln ausgestattet ist, um die zu behandelnde Flüssigkeit im Kreislauf zu führen. Dieser Eindampfkristallisator (1) ist **dadurch gekennzeichnet, dass** die Klarlösungs-Abzugseinrichtung (5) im Flüssigkeitsraum (4) des Eindampfkristallisators (1) angeordnet ist. Dadurch werden Verwirbelungen und somit Druckverluste in der Umwälzleitung (2) vermieden.

## Beschreibung

Die Erfindung betrifft einen Eindampfkristallisator, der mit einem Flüssigkeitsraum, gegebenenfalls einem Salzsack, einer Klarlösungs-Abzugseinrichtung, einer Umwälzleitung sowie mit per se bekannten Mitteln ausgestattet ist, um die zu behandelnde Flüssigkeit im Kreislauf zu führen.

Unter einem Eindampfkristallisator wird im Rahmen der vorliegenden Unterlagen eine Vorrichtung bezeichnet, bei der die zu behandelnde Flüssigkeit eingeengt wird, so dass die darin enthaltenden Feststoffe ausfallen und abgetrennt werden können. Bei dieser Flüssigkeit handelt es sich in den meisten Fällen um eine wässrige Flüssigkeit bzw. eine wässrige Lösung.

Es sind die verschiedensten Arten von Eindampfkristallisatoren bekannt, bei denen die Einengung der Flüssigkeit mit oder ohne Anwendung von Vakuum betrieben werden kann. Ein derartiger Eindampfkristallisator kann auch als Verdampfer bezeichnet werden. Zu den hier in Rede stehenden erfindungsgemäßen Eindampfkristallisatoren zählen somit Vorrichtungen zum Eindampfen, Vorrichtungen zur Eindampfkristallisation und Vorrichtungen zur Vakuumkühlkristallisation. Alle diese Vorrichtungen werden hier als Eindampfkristallisator bezeichnet.

Der erfindungsgemäße Eindampfkristallisator weist ebenso wie die bekannten Eindampfkristallisatoren eine Umwälzleitung auf, um einen Umwälzkreislauf sicher zu stellen. Mit anderen Worten, die zu behandelnde Flüssigkeit wird im Kreislauf geführt. Der Eindampfkristallisator ist somit mit den dafür erforderlichen Mitteln und unter anderem mit einer Umwälzleitung sowie einer Pumpe etc. ausgestattet.

Bei den bekannten Eindampfkristallisatoren ist im Flüssigkeitsumlauf und somit in der Umwälzleitung eine Klarlösungs-Abzugseinrichtung eingebaut. Die bekannten Eindampfkristallisatoren sind zudem üblicherweise, jedoch nicht zwingend, mit einem Salzsack ausgestattet, in dem die relative hoch mit den auszufällenden Bestandteilen konzentrierte Lösung abgezogen werden kann. Vorwiegend handelt es sich dabei um eine wässrige Salzlösung, so dass im Salzsack die relativ hoch mit Salzkristallen konzentrierte Lösung abgezogen werden kann.

Der Abzug der Klarlösung erfolgt üblicherweise durch eine in den Umwälzkreislauf eingebaute Klarlösungs-Abzugseinrichtung, die als umgekehrter Eindicker arbeitet und weitestgehend verhindert, dass Feststoffteile mit aus dem Kreislauf ausgetragen werden.

Durch Steuerung der Menge der abgezogenen Klarlösung und der in den Salzsack eingebrachten Verdrängerlösung lässt sich die Konzentration an auszufällender Verbindung bzw. Kristall im Eindampfkristallisator und im Umwälzkreislauf steuern.

Die in die Umwälzleitung eingebaute Klarlösungs-Abzugseinrichtung ist relativ aufwendig und führt zu zusätzlichen Druckverlusten durch Verwirbellungen in der Umwälzleitung. Dies führt schlussendlich zu einem höheren Leistungsbedarf für die Umwälzpumpe und somit zu einem höheren Energieverbrauch.

Aufgabe der vorliegenden Erfindung ist es, einen Eindampfkristallisator derart zu verbessern, dass eine wirksamere und/oder kostengünstigere Ausführung ermöglicht wird.

Gelöst wird diese Aufgabe durch die Lehre der Ansprüche.

Bei dem erfindungsgemäßen Eindampfkristallisator befindet sich die Klarlösungs-Abzugseinrichtung somit nicht mehr in der Umwälzleitung. Vielmehr ist sie in den Flüssigkeitsraum des Eindampfkristallisators versetzt worden und somit dort angeordnet.

Aufgrund der vorgeschlagenen Anordnung im Inneren des Flüssigkeitsraums ergeben sich verschiedene Vorteile. So werden Verwirbellungen und damit Druckverluste in der Umwälzleitung vermieden. Der Leistungsbedarf für die Umwälzpumpe ist letztendlich geringer, so dass gegebenenfalls eine kostengünstigere Pumpe zur Anwendung gebracht werden kann. Außerdem reduzieren sich die Energiekosten.

Nach einer bevorzugten Ausführungsform ist die Klarlösungs-Abzugseinrichtung zentral im Flüssigkeitsraum angeordnet. Diese Klarlösungs-Abzugseinrichtung kann einstufig oder auch mehrstufig ausgestaltet sein. Die Klarlösung kann in beiden Fällen durch ein zentrales Rohr aus dem Flüssigkeitsraum herausgeführt werden. Bei den bisher bekannten Eindampfkristallisatoren, bei denen die Klarlösung-Abzugseinrichtung in der Umwälzleitung angeordnet war, musste ein derartiger Abzug an mehreren Stellen erfolgen, um ein gleichmäßiges Strömungsbild und eine gleichmäßige Abscheidung zu erreichen. Derartige Mehrfachabzüge sind nicht nur teurer, sondern erfordern auch einen wesentlich höheren Regelungsaufwand als der erfindungsgemäß vorgezogene Zentralabzug.

Nach einer weiterhin bevorzugten Ausführungsform ist die Klarlösungs-Abzugseinrichtung mit einem sich nach unten erweiternden Abzugstrichter ausgestattet. Die Klarlösung wird somit von unten her in die Abzugseinrichtung hineinbewegt, beispielsweise hineingedrückt. Die Form dieses Abzugstrichter kann im Prinzip beliebig sein. Die Wand des Abzugstrichters wird vorzugsweise jedoch steil ausgeführt, so dass sich an der Oberfläche keine Ablagerungen bilden bzw. kein Salz absetzen kann. Der Winkel α zwischen der Wand des Abzugstrichters und der Längsachse des Abzugstrichters beträgt vorzugsweise 10° bis 50°, bezogen auf den Querschnitt. Mit dem Bereich 10° bis 50° sind im übrigen alle dazwischen liegenden Bereiche und alle auch darin eingeschlossenen Einzelwerte umfasst und offenbart. Dieser Winkel α kann somit beispielsweise folgende Werte annehmen: 10 ,11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 und 50.

Dieser Winkel ist zweckmäßigerweise über die gesamte vertikale Erstreckung des Abzugstrichter der gleiche. Dies ist jedoch nicht zwingend. Somit kann der Abzugstrichter auch eine geschwungene oder irgend eine andere Form besitzen.

Vorzugsweise ist der Abzugstrichter rotationssymmetrisch und stellt insbesondere einen sich konisch nach unten erweiternden Abzugstrichter dar.

Nach einer weiterhin bevorzugten Ausführungsform wird die Umwälzleitung bei dem erfindungsgemäßen Eindampfkristallisator unterhalb des Flüssigkeitsstandes (bezieht sich auf den Betriebszustand) seitlich in den Flüssigkeitsraum bis in dessen Zentrum zurückgeführt und erstreckt sich dann im weiteren Verlauf zentral nach oben. An Ihrem Ende besitzt diese Leitung einen sich nach oben öffnenden Mündungstrichter, der vorzugsweise rotationssymmetrisch und insbesondere konusförmig ausgebildet ist.

Bei letzterer Ausführungsform wird der Abzugstrichter vorzugsweise derart ausgestaltet, dass er außen um den Mündungstrichter umläuft und somit einen Ringtrichter bildet. Man kann auch sagen, dass der Abzugstrichter einen Ringkanal bildet.

Nach einer bevorzugten Ausführungsform wird dieser ringförmig umlaufende Abzugstrichter einerseits durch die Seitenwand des Mündungstrichters und eine sich von dieser Seitenwand des Mündungstrichters nach unten sowie nach radial außen erstreckende Rand gebildet. Dieser so erhaltende Ringkanal kann im Prinzip beliebige Querschnittsform besitzen. Nach einer bevorzugten Ausführungsform ist der Querschnitt dieses ringförmigen Abzugstrichters bzw. des Ringkanals in etwa keilförmig; es ergibt sich somit eine nach unten offene V-Form. Der zwischen der Wand und der Senkrechten eingeschlossene Winkel α, bezogen auf den Querschnitt, beträgt vorzugsweise 10 ° bis 50°. Bezüglich dieses Winkels α gilt das oben Gesagte. Die Wand des Abzugstrichters ist somit steil auszubilden. Gleiches gilt im Übrigen bezüglich des Winkels zwischen der Senkrechten und der Seitenwand des Mündungstrichters. Auch hier beträgt der Winkel α, bezogen auf den Querschnitt, vorzugsweise 10° bis 50°. Der Winkel der V-Querschnittsform beträgt somit 20° bis 100°.

Nach einer weiterhin bevorzugten Ausführungsform sind mehrere Abzugstrichter übereinander in dem Flüssigkeitsraum angeordnet.

Die Erfindung wird nachstehend anhand der beiliegenden Figuren näher erläutert. Dabei zeigen
- Figuren 1 und 2: zwei Ausführungsformen eines bekannten Eindampf- kristallisators in schematischer Funktionsdarstellung, bei dem eine Klarlösungs-Abzugseinrichtung in die Umwälz- leitung eingebaut ist,
- Figur 3: eine der Figur 1 entsprechende Funktionsdarstellung einer ersten Ausführungsform eines erfindungsgemäßen Eindampfkristallisators und
- Figur 4: eine der Figur 2 entsprechende schematische Funktions- darstellung einer weiteren Ausführungsform eines erfindungsgemäßen Eindampfkristallisators.

Alle in den Figuren gezeigten Eindampfkristallisatoren 1 sind mit einem Salzsack 3, einer Umwälzleitung 2, einer Umwälzpumpe 7 und einem Heizkörper 8 ausgestattet. Die in dem Flüssigkeitsraum 4 des Eindampfkristallisators einzuengende Flüssigkeit wird durch die Umwälzleitung 2, die Umwälzpumpe 7 und den Heizkörper 8 im Kreislauf geführt.

Die Anwesenheit eines Salzsackes 3 ist jedoch nicht zwingend; stattdessen kann eine Abzugsleitung vorgesehen sein. Auch kann der Heizkörper 8 im Falle einer Vorrichtung zur Vakuumkristallisation durch eine Kühleinrichtung ersetzt sein. Im Rahmen der vorliegenden Unterlagen wird der erfindungsgemäße Eindampfkristallisator 1 unter Bezug auf einen mit einem Salzsack 3 und einem Heizkörper 8 ausgestatteten Eindampfkristallisator 1 beschrieben, wobei dies keinerlei einschränkenden Charakter hat.

Die in den Figuren dargestellten Eindampfkristallisatoren 1 dienen zum Einengen einer wässrigen Lösung, wobei ein Salz ausgeschieden bzw. abgetrennt wird. Diese Einsatzgebiet steht stellvertretend für alle Einsatzgebiete derartiger Eindampfkristallisatoren.

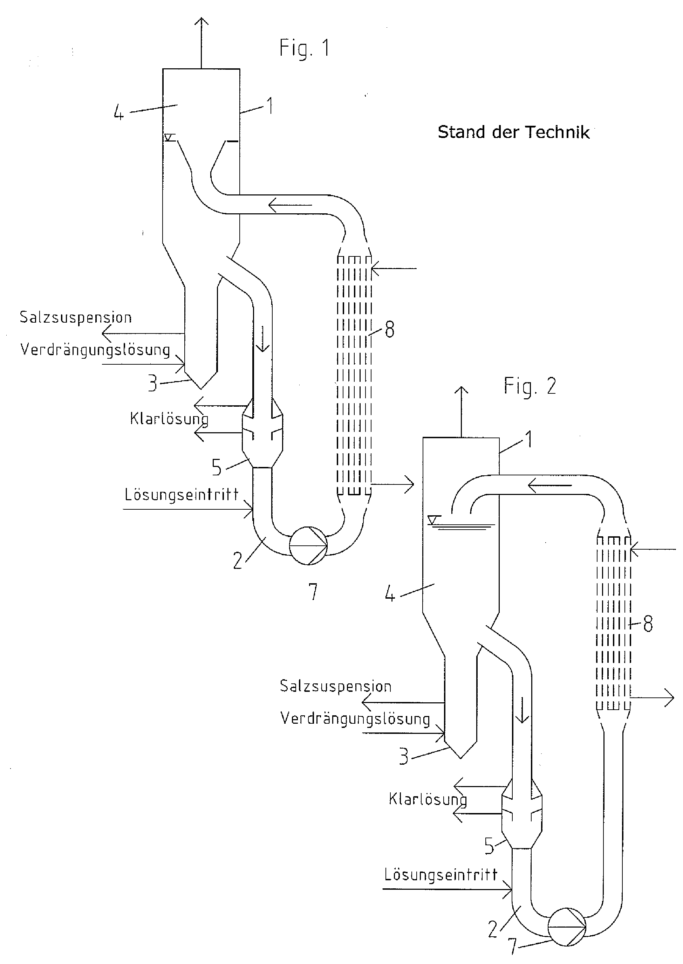

Bei den in den Figuren 1 und 2 gezeigten Eindampfkristallisatoren 1 des Standes der Technik ist in die Umwälzleitung 2 eine Klarlösungs-Abzugseinrichtung 5 eingebaut.

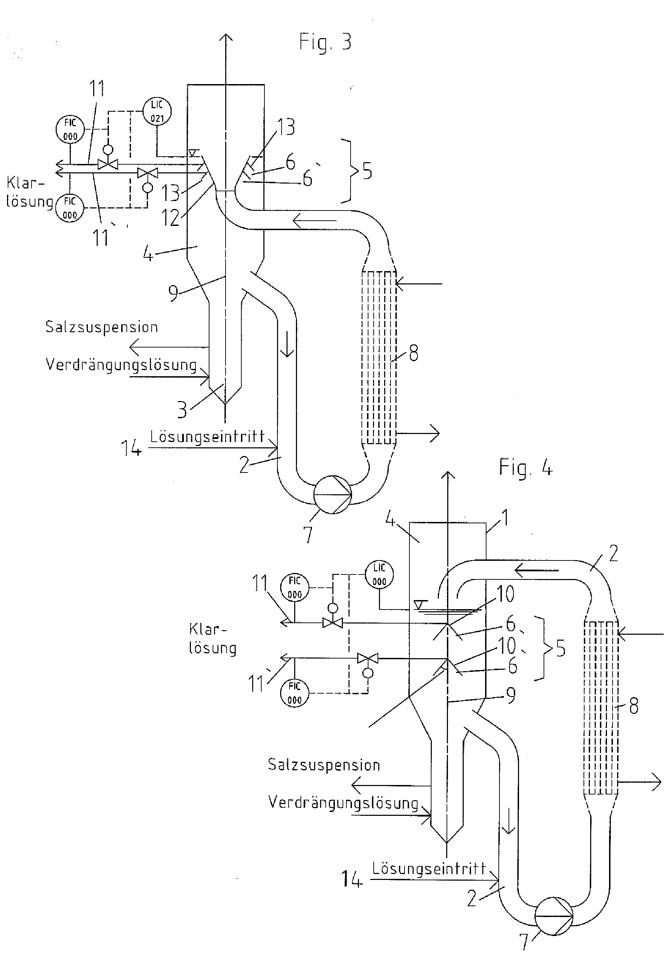

Bei den in den Figuren 3 und 4 dargestellten Eindampfkristallisatoren ist diese Klarlösungs-Abzugseinrichtung 5 im Flüssigkeitsraum 4 des Eindampfkristallisators 1 angeordnet.

Bei dem in der Figur 4 gezeigten Eindampfkristallisator 1 wird die Umwälzleitung 2 oberhalb des Flüssigkeitsstandes im Flüssigkeitsraum 4 in den Eindampfkristallisator seitlich ein- bzw. zurückgeführt. Diese Umwälzleitung 2 erfährt dann eine Krümmung nach unten und mündet in etwa zentrisch nach unten. Die durch diese Umwälzleitung 2 zurückgeführte Lösung wird dann von oben auf die im Flüssigkeitsraum 4 bereits befindliche Lösung aufgegeben.

Unterhalb des Flüssigkeitsstandes sind im Flüssigkeitsraum 4 zwei übereinander angeordnete Klarlösungs-Abzugseinrichtungen 5 angeordnet, die mit jeweils einem sich nach unten konisch erweiternden Abzugstrichter 6, 6' ausgestattet sind. Der zwischen der Längsachse 10, 9 und der Wand 10 eingeschlossene Winkel α beträgt 30°.

Von diesem Abzugstrichter 6, 6' führt jeweils eine Leitung 11, 11' aus dem Flüssigkeitsraum 4 hinaus. Über diese Leitungen 11, 11' wird Klarlösung aus dem Flüssigkeitsraum 4 abgezogen. Die dafür erforderlichen Einrichtungen, beispielsweise Pumpen etc. sind außerhalb des Flüssigkeitsraumes 4 angeordnet.

Der in der Figur 3 gezeigte Eindampfkristallisator 1 ist ähnlich aufgebaut wie der in der Figur 4 gezeigte Eindampfkristallisator 1. Der Unterschied zwischen diesen beiden Eindampfkristallisatoren 1 besteht im wesentlichen darin, dass bei dem in der Figur 3 gezeigten Eindampfkristallisator 1 die Umwälzleitung 2 unterhalb des Flüssigkeitsstandes im Flüssigkeitsraum 4 in diesen Flüssigkeitsraum 4 und somit in den Eindampfkristallisator 1 seitlich eingeführt wird und sich bis zum Zentrum bzw. bis zur Längsmittelachse 9 erstreckt und an ihrem Ende einen sich nach oben öffnenden, konusförmigen Mündungstrichter 12 aufweist. Dieser Mündungstrichter 12 ist rotationssymmetrisch zur Längsachse 9 angeordnet.

Die Abzugstrichter 6, 6' werden bei dieser Ausführungsform einerseits durch die Seitenwand des Mündungstrichters 12 und andererseits eine sich von dieser Seitenwand nach unten sowie nach radial außen erstreckende Wand 13 gebildet. Es ergeben sich dadurch zwei ringförmig um den Mündungstrichter 12 umlaufende Abzugstrichter 6, 6' mit einem keilförmigen Querschnitt. Auch in diesem Fall beträgt der zwischen der Wand 13 und der Senkrechten eingeschlossene Winkel α sowie der zwischen der Seitenwand des Mündungstrichters 12 und der Senkrechten eingeschlossene Winkel α 30°. Mit anderen Worten, die Abzugstrichter 6, 6' bilden ringförmig umlaufende Kanäle mit einem V-förmigen, nach unten offenen Querschnitt. Von dort wird die Klarlösung über jeweils eine dazugehörige Leitung nach außen abgezogen.

Bei beiden in den Figuren 3 und 4 gezeigten Eindampfkristallisatoren 1 ist die Klarlösungs-Abzugseinrichtung 5 somit zweistufig ausgestaltet und besitzt zwei übereinander angeordnete Abzugstrichter 6, 6'.

Bei allen hier beschriebenen erfindungsgemäßen Eindampfkristallisatoren 1 führen natürlich eine oder mehrere Leitungen von den Klarlösungs-Abzugseinrichtungen 5 im Inneren der Flüssigkeitsräume 4 aus diesen Flüssigkeitsräumen nach außen. Dort außen sind dann auch die für den Abzug der Klarlösung erforderlichen Einrichtungen, beispielsweise Pumpe, Ventile, Steuerung angebracht. Diese Einrichtungen sind üblicher Art und bedürfen keiner weiteren Erläuterung.

Die einzudampfende Flüssigkeit wird über eine Leitung 14 in den Umwälzkreislauf zugeführt. Der Flüssigkeitsdampf wird oben am Eindampfkristallisator 1 abgeführt oder abgezogen, erforderlichenfalls unter Anlegung eines Vakuums.

### Bezugszeichenliste

- 1: Eindampfkristallisator
- 2: Umwälzleitung
- 3: Salzsack
- 4: Flüssigkeitsraum
- 5: Klarlösungs-Abzugseinrichtung
- 6, 6': Abzugstrichter
- 7: Umwälzpumpe
- 8: Heizkörper
- 9: Längsachse
- 10: Wand
- 11, 11': Leitung
- 12: Mündungstrichter
- 13: Wand
- 14: Leitung

## Patentansprüche

1. Eindampfkristallisator (1), der mit einem Flüssigkeitsraum (4), gegebenenfalls einem Salzsack (3), einer Klarlösungs-Abzugseinrichtung (5), einer Umwälzleitung (2) sowie mit per se bekannten Mitteln ausgestattet ist, um die zu behandelnde Flüssigkeit im Kreislauf zu führen,
**dadurch gekennzeichnet, dass**
die Klarlösungs-Abzugseinrichtung (5) im Flüssigkeitsraum (4) des Eindampfkristallisators (1) angeordnet ist.

2. Eindampfkristallisator nach Anspruch 1,
**dadurch gekennzeichnet, dass**
die Klarlösungs-Abzugseinrichtung (5) zentral im Flüssigkeitsraum (4) angeordnet ist.

3. Eindampfkristallisator nach Anspruch 1 oder 2,
**dadurch gekennzeichnet, dass**
die Klarlösungs-Abzugseinrichtung (5) einstufig oder mehrstufig ausgestaltet ist.

4. Eindampfkristallisator nach einem der vorherigen Ansprüche,
**dadurch gekennzeichnet, dass**
die Klarlösungs-Abzugseinrichtung (5) mit einem, sich nach unten erweiternden Abzugstrichter (6) ausgestattet ist.

5. Eindampfkristallisator nach Anspruch 4,
**dadurch gekennzeichnet, dass**
sich der Abzugstrichter (6) konisch nach unten erweitert.

6. Eindampfkristallisator nach Anspruch 4 oder 5,
**dadurch gekennzeichnet, dass**
der zwischen der Wand (10) und der Längsachse (9) eingeschlossene Winkel α des Abzugstrichters 10° bis 50° beträgt, bezogen auf den Querschnitt.

7. Eindampfkristallisator nach einem der Ansprüche 1 bis 4, **dadurch gekennzeichnet, dass**
die Umwälzleitung (2) unterhalb des Flüssigkeitsstandes seitlich in den Flüssigkeitsraum (4) bis in dessen Zentrum zurückgeführt wird, sich im weiteren Verlauf zentral nach oben erstreckt und an ihrem Ende einen sich nach oben öffnenden, insbesondere konusförmigen Mündungstrichter (12) aufweist.

8. Eindampfkristallisator nach Anspruch 7,
**dadurch gekennzeichnet, dass**
der Abzugstrichter (6, 6') ringförmig außen um den Mündungstrichter (12) umläuft und somit einen Ringtrichter bilden.

9. Eindampfkristallisator nach Anspruch 8,
**dadurch gekennzeichnet, dass**
der Abzugstrichter (6, 6') durch die Seitenwand des Mündungstrichters (12) und eine sich von dort nach unten sowie nach radial außen erstreckende Wand (13) gebildet wird.

10. Eindampfkristallisator nach Anspruch 8,
**dadurch gekennzeichnet, dass**
der Querschnitt des Abzugstrichters (6, 6') in etwa keilförmig ausgebildet ist und der zwischen der Wand (13) und der Senkrechten eingeschlossene Winkel α, bezogen auf den Querschnitt, 10° bis 50° beträgt.

11. Eindampfkristallisator nach einem der vorhergehenden Ansprüche, **dadurch gekennzeichnet, dass**
mehrere Abzugstrichter (6, 6') übereinander angeordnet sind.
